# EUROPEAN PATENT SPECIFICATION

(11) **EP 1 908 317 B1**
(45) Date of publication and mention of the grant of the patent: **13.11.2013**
(21) Application number: 06748052.5
(22) Date of filing: 21.06.2006
(51) Int. Cl.: H04W 64/00

(54) **SCHEDULING FOR UPLINK AND DOWNLINK TIME OF ARRIVAL POSITIONING**
ABLAUFPLANUNG FÜR AUFWÄRTSSTRECKEN- UND ABWÄRTSSTRECKEN-ANKUNFTSZEITPOSITIONIERUNG
PROGRAMMATION POUR LE POSITIONNEMENT DE LA DIFFERENCE DE TEMPS D'ARRIVEE DE LIAISON MONTANTE ET DE LIAISON DESCENDANTE

(30) Priority: 26.07.2005 SE 0501741
(43) Date of publication of application: 09.04.2008
(73) Proprietor: Telefonaktiebolaget LM Ericsson (Publ), 164 83 Stockholm (SE)
(72) Inventor: WIGREN, Torbjörn, S-756 53 Uppsala (SE); KARLSSON, Jonas, S-191 39 Sollentuna (SE); GÖRANSSON, Bo, S-191 38 Sollentuna (SE); PARKVALL, Stefan, S-113 22 Stockholm (SE); KANGAS, Ari, S-181 30 Lidingö (SE); GERSTENBERGER, Dirk, S-164 48 Kista (SE)
(74) Representative: Kühn, Friedrich Heinrich
(86) International application number: PCT/SE2006/050213
(87) International publication number: WO 2007/013850

(56) References cited:
- WO-A1-00/69199
- WO-A1-00/69199
- WO-A1-99/21389
- WO-A1-99/29130
- WO-A1-99/59373
- WO-A1-03/003778
- WO-A2-99/04511
- GB-A- 2 353 671
- US-B1- 6 191 737
- US-B1- 6 861 980

## Description

### TECHNICAL FIELD

The present invention relates to methods and arrangements in telecommunication systems for scheduling on the uplink and downlink in conjunction with positioning tasks for user equipments in said system.

### BACKGROUND

Cellular telecommunication systems can be equipped to perform a number of different positioning methods to enable location services to the cellular subscribers. The following paragraphs present some conceivable methods:
Cell-ID positioning determines the cell to which the user equipment (UE) is connected. The position of the user is hence determined with cell granularity. Typically the radio network controller (RNC) of the radio network (RAN) determines a 3-15 corner polygon that determines the geographical extension of the cell. The corners of this polygon are given as latitude, longitude pairs in the WGS84 geographical reference system. The cell-ID method is the backbone of all cellular positioning system since it is always available when the UE can be connected to the system.

Enhanced cell-ID (Ecell-ID) positioning augments the Cell-ID positioning with auxiliary information that narrows down the area that is determined by the cell polygon. The most useful method in the wideband code division multiple access (WCDMA) system is the round trip time (RTT) measurement. This measurement determines the travel time, back and forth, from the radio base station (RBS) to the UE and back. Using the speed of light, the distance from the known position of the RBS to the UE can be calculated, which determines a circular strip around the RBS where the UE is located. The thickness of the strip is determined by the measurement uncertainty. The Ecell-ID method is obtained by noticing that the UE is located both in the cell and in the circular strip - hence the UE is located in the intersection of these two geographical regions.

Assisted GPS (A-GPS) positioning is an enhancement of the US military global positioning system (GPS). GPS reference receivers attached to, e.g., a cellular communication system, collect assistance data that, when transmitted to GPS receivers in terminals connected to the cellular communication system, enhances the performance of the GPS terminal receivers. Typically, A-GPS accuracy can become as good as 10 meters also without differential operation. The accuracy becomes worse in dense urban areas and indoors, where the sensitivity is often not high enough for detection of the very weak signals from the GPS satellites. Advantages of A-GPS include a high accuracy. The method easily meets the North-American emergency positioning E-911 requirements of 50 meters for 67% of all positioning and 150 meters for 95% of all positionings. A drawback is the limited indoor coverage, which is a result of the low ranging signal strengths that are obtained at ground level.

Downlink time difference of arrival with idle periods in the downlink (OTDOA-IPDL) refers to a positioning method that is similar to A-GPS in that it relies on time difference of arrival measurements. However, the OTDOA-IPDL method uses UE measurements of Pilot radio (CPICH in WCDMA) signals transmitted from several RBSs. The measurement results are signalled to the RNC, where a hyperbolic trilateration method is used for calculation of the position of the UE. In order to enhance the hearability of the RBSs in the UE, there is a possibility to use idle periods in the downlink (IPDL) in order to attenuate the transmissions from the RBS to which the UE is connected. This reduces the interference and hence enhances the hearability of other RBSs. A tentative advantage with OTDOA-IPDL is that it theoretically provides a better indoor coverage than does A-GPS.

Uplink time difference of arrival (UTDOA) is a positioning method that is currently under standardization within the 3GPP organization. It is similar to A-GPS in that it relies on time difference of arrival measurements. However, the UTDOA method uses RBS (or separate location measurement unit (LMU)) measurements of signals transmitted from the positioned UE. The transmitted signal is detected in a number of RBSs or LMUs, after which the measured results are signalled to a positioning node where the position of the UE is determined by a trilateration method. In order to be able to detect the time of arrival from measurements of opportunity from the UE, a reference signal first needs to be created in a master-LMU or master RBS. This is done by decoding of the signal, followed by reconstruction of the chip stream that then forms the reference signal. An advantage of UTDOA positioning is that it provides a better indoor coverage than does A-GPS. Outdoor accuracy is normally inferior to A-GPS though.

An issue with terrestrial time difference of arrival methods, i.e. OTDOA-IPDL and UTDOA, is the receiver sensitivity when positioning is considered. Theoretically the methods can provide a three-dimensional position from 4 time-of-arrival measurements (equivalent to three time-difference-of-arrival (pseudo)measurements). However, radio propagation conditions are far less beneficial than for A-GPS, since OTDOA-IPDL and UTDOA ranging signals propagate along the surface of the earth, whereas A-GPS signals propagate from above. The terrestrial positioning methods therefore suffer more from non-line-of-sight (LOS) propagation and multipath propagation. This results in outlier measurements, whose suppression requires the availability of excess detections, i.e. detections from significantly more than the minimum number of RBSs. In practice, to achieve a useful positioning accuracy, at least 6-8 RBSs need to be detected in the UE in case OTDOA-IPDL positioning is used. For UTDOA positioning at least 6-8 RBSs need to detect the UE transmissions in order to obtain useful position estimates in practical environments.

The consequence of the above is that more remote RBS need to be detected (for OTDOA-IPDL) or need to detect (for UTDOA). This means that lower signal Strengths need to be detected with high probability. Calculations typically show that signals need to be detected down to about -40 dB C/I. Further, the pre-detection step needs to enhance the signal to about 11-13 dB C/I in order to achieve a sufficiently low false alarm rate. In essence, the processing gain for positioning purposes in any CDMA system needs to be 50-55 dB to make terrestrial positioning useful. This is significantly more than what is needed for other services, which means that positioning sensitivity requirements need to be assessed at the definition phase of the air-interface.

There is thus an apparent need to circumvent and/or improve the situation in case certain multiple access schemes are in place. Together with multiple access methods with combined variable bandwidth or time division access with scrambling codes added in particular orthogonal frequency division multiple (OFDM) access schemes are discussed. OFDM is a modulation scheme using multi-carrier transmission. The data stream to be transmitted is split into *N* parallel substreams, each with a *N* times lower rate than the original data stream. Each sub-stream modulates a separate sub-carrier. By selecting the sub-carrier spacing Δ*f*=1/*T*, where *T* is the symbol duration, the sub-carriers are mutually orthogonal. Due to the relatively narrow bandwidth of each sub-carrier, the fading per sub-carrier will be (nearly) flat. Receiver processing is therefore straight-forward and OFDM is therefore an attractive solution for systems operating in time-dispersive environments. This, as well as other properties, has made OFDM the main candidate for the downlink of studies on UTRA long-term evolution (LTE) in 3GPP.

Regarding the uplink, one main alternative is localized FDMA, where the scheduler assigns to a UE a specific bandwidth to be used for a specific period in time. This time duration is typically rather short, in the (sub-) millisecond range, after which other terminals are commanded to transmit. The frequency band assigned to a terminal can be contiguous or non-contiguous in frequency. It should be noted that the disclosed techniques of the present invention disclosure may also be partly applicable to other access schemes than those discussed here.

The multiple access scheme for an uplink is a combination of
- Frequency-division and time division multiple access, where each user is allocated one set of resources in the frequency domain (with adjustable bandwidth) for a given and variable period of time (time slots with variable length), and
- Scrambling codes that are unique to each UE within the system.

In the current WCDMA system additional high-speed channels have been defined for the downlink (high speed downlink packet access, HSDPA) and the uplink (enhanced uplink, EUL). Major performance enhancements for these high-speed channels are provided by the scheduler function. The main idea in HSDPA is fast scheduling of transmissions between the RBS and the UEs so that the communication with a specific UE occurs at instances in time where the radio conditions are favourable (e.g. avoiding fading dips). The enhanced uplink concept rather schedules excess capacity of the uplink so that enhanced uplink traffic is allocated to periods of time when the total load of the uplink is sufficiently low.

WO99/21389A1 relates to finding the position of a mobile station in a cellular telephone system. In a cellular telephone system of the type having the capability of making measurements useful in determining the location of the mobile station, at least one such measurement is made. A mathematical function is used to determine the most appropriate subsets of base stations in order to minimize the cost in the system. A certain position fix accuracy is then obtained within a certain time based upon the measurements and the function.

WO99/59373 teaches selecting base transceiver stations to gather signal timing data for making an accurate location determination. In selecting base transceiver stations, initially, the base transceiver station is selected, next a handover candidate list is searched for base transceiver stations that are connected to the same base station controller as the serving base station transceiver and which are not cosited with a previously selected base station transceiver. Next, a positioning neighbour list may be searched to select a base transceiver station near a base transceiver station on the handover candidate list that is connected to the same base station controller as the serving base transceiver station. Base transceiver stations on the positioning neighbour list that are not on the handover candidate list may not have adequate signal quality for the handover candidate list, but are able to make the timing advance measurements required for a location determination. Accordingly, base transceiver stations may be selected from the positioning neighbour list as a complement to selection from the handover candidate list.

WO00/69199A1 relates to reliably locating the position of a mobile station also in a case that no direct connection to a base station is possible. This is achieved by means of using fixed transmitting stations for locating a target mobile station by transmitting a measurement signal from each fixed transmitting station to the mobile station. This is furthermore achieved by using a relay station which is adapted to receive the measurement signal from the corresponding fixed transmitting station and to forward the signal to the target mobile station, in case a direct transmission from one or more of the fixed transmitting stations is not available. Additionally, the distance is determined between the target mobile station to the fixed transmitting stations and/or the relay stations on the basis of the measurement signal, and the position of the target mobile station is located on the basis of the determined distance.

WO99/04511A2 discloses load assignment and dynamic load balancing among multiple carrier frequencies within a multiple carrier frequency wireless communication system. The wireless communication system provides wireless service to a mobile unit operating within a service area, and includes a mobile switching center, a base station controller, a first plurality of base stations and a second plurality of base stations. The first plurality of base stations couple to one or more base station controller(s) and operate on a first carrier frequency, while the second plurality of base stations couple to one or more base station controller(s) and operate on a second carrier frequency. The mobile switching center and one or more base station controller(s) operate to assign the mobile unit to one or more of the first plurality of base stations or one or more of the second plurality of base stations, based upon available base station capacities. In determining capacity of base stations which may operate on different carrier frequencies, candidate base stations are determined to which capacity requests are sent. Based upon capacity responses, the mobile unit is assigned to one or more of the base stations.

WO03/003778A1 teaches a method to control the traffic generated by packet switched services in digital cellular communication networks. The method, enabled by the operator or by radio resource manager request, exploits network controlled cell reselection procedure and is based on the evaluation of the level of occupation of radio resources and, for every GPRS mobile, on the evaluation of the signal strength received both from the serving cell and from the cells adjacent to the serving one. Suitable cells towards which to move the GPRS mobiles are searched by the procedure. GPRS mobiles are then moved towards a candidate target cell through network controlled cell reselection if the cell supports packet switched service and has an occupation level of radio resources lower than a threshold parameter set by the operator on a cell basis.

### SUMMARY

From the description above it has been noted that A-GPS positioning is a high precision technology, however, with only limited indoor positioning availability as a major drawback while OTDPA-IPDL and UTDOA positioning have the technical potential to provide better indoor coverage than A-GPS and to deliver good precision whereby, however, the presently available detection sensitivities are not sufficient to provide a good enough accuracy. The introduction of orthogonal (uplink/downlink) radio communication channels between terminals or radio base stations, as far as terrestrial (OTDOA-IPDL and/or UTDOA) positioning measurements are concerned, can relax the very hard detection sensitivity requirements (at least -40 dB C/I). A problem is then that orthogonality is not perfect; rather orthogonality is limited by the cross correlation properties of the scrambling codes.

It is an object of the present invention to solve the above problem by introducing arrangements and methods for scheduling of positioning channels and traffic in order to recover a sufficiently perfect orthogonality including scheduling tasks for the downlink and uplink direction.

This object is achieved by a scheduling manager 111,211 and a method in said manager according to claims 6 and 1 respectively for co-ordinating the scheduling and measurement timing of first and second positioning schedulers 122,222 that, respectively, allocate uplink and downlink radio resources, by a positioning schedulers according to claim 8 and by a method for scheduling according to claim 5.

Said first and second positioning schedulers 122,222, which are integrated with existing schedulers 123,223 for accounting, e.g., load and available hardware resources, aim at securing a sufficiently perfect orthogonality in order to relax the interference conditions that normally limit the positioning detection performance by allocating uplink radio resources and downlink radio resources, respectively, on the air interface in order to secure a successful positioning (time-of-arrival) measurement for a user equipment 13,23 that is to be positioned. Hereby the user equipment 13,23 need not be located in a cell served by the radio base station unit 12,22 in question.

The scheduling manager 111,211 typically resides in a centralised network node 11,21, e.g. the RNC of a WCDMA system, whereas the positioning schedulers 122,222 can reside, e.g., in the radio base stations 12,22 of the radio access network. However, it is possible to locate the scheduling manager and positioning schedulers in whatever network unit that is responsible for scheduling tasks and the handling of positioning information.

The scheduling manager 111,211 is either a part of the unit 112,212 responsible for UE positioning, or responds to commands from said unit whenever a terrestrial positioning shall be performed for a user equipment. The scheduling manager 111,211 is responsible for at least the following functionality:
- Receiving commands for terrestrial positioning measurements of a user equipment preferably together with information that support the scheduling of such measurements, e.g. the cell ID of the cell where the user equipment is connected and a list of "close enough" radio base stations where radio resources for positioning measurements are to be scheduled.
- Requesting and/or receiving information from candidate radio base stations used for positioning. The information may include presently available radio resources, for instance free frequency bands, time slots in the uplink, free orthogonal tones in the downlink.

- Calculation of scheduling commands for the respective positioning scheduler. This includes for the uplink access scheme mentioned above an indication of measurement time slot(s), frequency band(s) and bandwidth. For the downlink the information includes an indication of allowed tones as well as time slots for measurements. The algorithms used for this purpose need to balance the positioning needs, the reported available resources from radio base stations, priorities, while at the same time basic constraints are met.
- Signalling of the scheduling commands to each affected positioning scheduler.

### BRIEF DESCRIPTION OF THE DRAWINGS

Figure 1 illustrates a block diagram of an uplink positioning scheduler.
Figure 2 illustrates a block diagram of a downlink positioning scheduler.

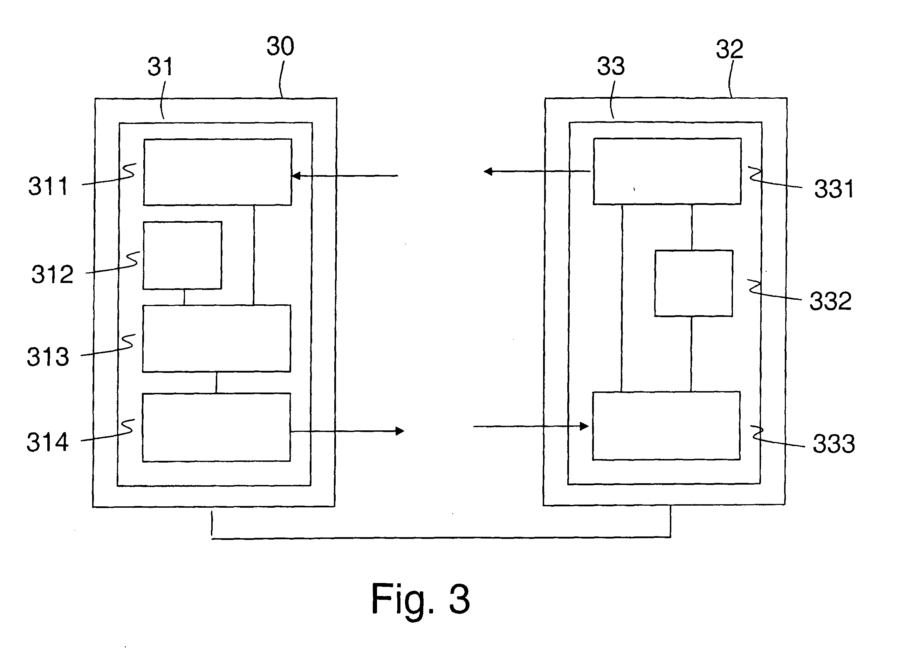

Figure 3 illustrates detailed block diagrams of a radio network controller and a radio base station in which the present invention can be integrated.

### DETAILED DESCRIPTION

The present invention assumes introduction of orthogonality between terminals as far as terrestrial (OTDOA-IPDL and/or UTDOA) positioning measurements are concerned which, however, implies the problem that orthogonality is not perfect but rather limited by the cross correlation properties of the scrambling codes. In current 3G WCDMA-systems, for instance, the downlink cross correlation suppression is worse than 10*log10(38400)=45*dB* since the code length is 38400 chips. In practice the cross correlation suppression may be only 35 dB. This follows since in GPS the cross correlation performance is optimized by the use of Gold-codes. The performance is anyway about 7 dB below the theoretical limit, so a loss of 10 dB seems to be a realistic assumption for the scrambling codes used in current 3G WCDMA-systems. Hence, close to an additional 20 dB of processing gain may be needed in order to get a sufficient performance when applying terrestrial positioning methods in this case. In the WCDMA uplink the code length is longer and a higher processing gain is possible by integrating over a sufficiently long time period. However, (coherent) accumulation of energy over a long period of time may be cumbersome as the propagation conditions and/or UE position may change during this period.

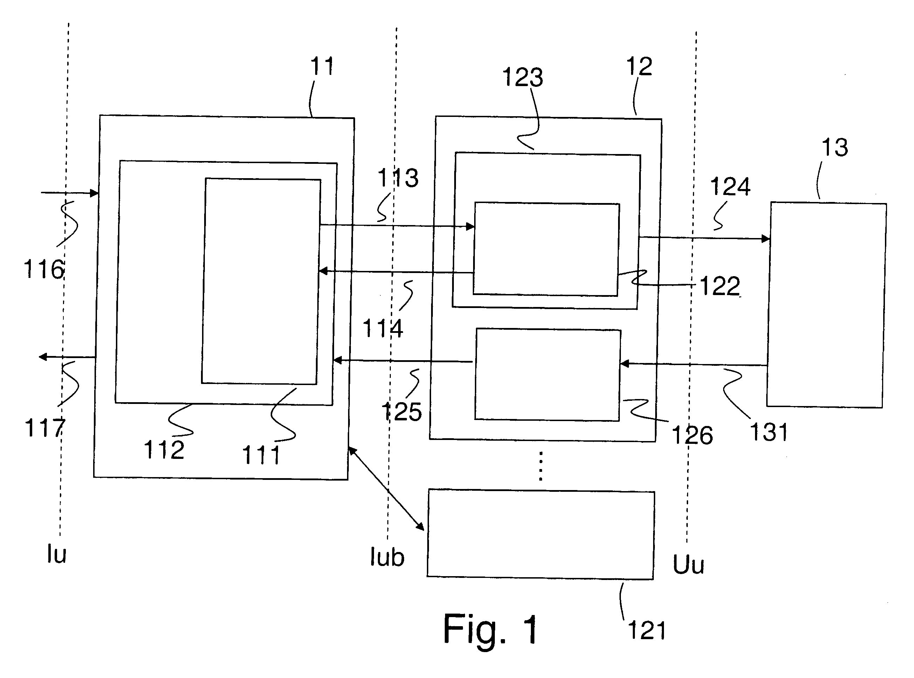

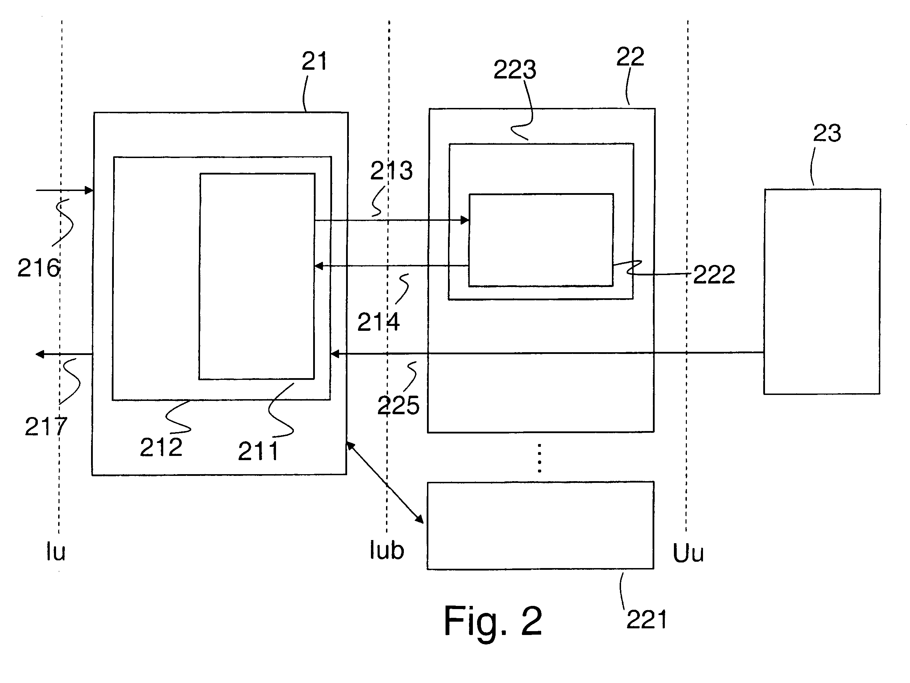

The following detailed description is made with reference to figure 1, depicting the uplink method, and figure 2, which depicts the downlink method. Both figures depict typical WCDMA RAN configurations; the present invention, however, is not limited to such configurations but may be implemented in many other ways.

The information signalled to the radio base stations in a downlink positioning application is different for different transmitting radio base stations. For a single positioning, e.g. by selection of different tones and time slots for different radio base stations, orthogonality can be maintained in the receiving UE that performs the time of arrival positioning measurements. For multiple users, scheduling for orthogonality needs to account for different sets of transmitting radio base stations, a fact that may couple the scheduling task over the entire RAN. For uplink scheduling for positioning, as described herein, the task is to ensure that the transmissions from different user equipments that may interfere are scheduled so as to maintain orthogonality. This requires scheduling of allowed frequency bands and time slots for positioning transmissions over "close enough" simultaneous terrestrial positionings over the RAN.

Regarding the uplink method in conjunction with figure 1, the Radio Network Controller 11 receives a LOCATION REPORTING CONTROL message 116. The unit 112 responsible for user equipment (UE) positioning determines that an uplink terrestrial positioning method is to be used. The UE positioning may determine, e.g., the geographical Cell-ID position of the user equipment 13 or even compute a list of radio base stations 12,121 that are within range from the user equipment 13 to be positioned. Then, the unit 112 responsible for UE positioning function forwards this information to the Positioning Scheduler Manager 111 in form of a command to schedule positioning measurements. As depicted in figure 1, the Positioning Scheduler Manager 111 may be a part of the unit 112 responsible for UE Positioning. The forwarded information includes preferably the interval in time during which the positioning measurements shall be completed. The Positioning Scheduler Manager 111 may first need to retrieve information from all the radio base stations 12,121 that are involved in the new positioning. This information is signalled across the Iub-, or possibly the Iur-, interface. The signalled information 114 includes at least information on time slots, frequency bands, and priorities for resources that are already allocated to other user equipments that perform positioning transmissions. The Positioning Scheduler Manager 111 then determines the allowed time slot(s), the allowed frequency band(s), and bandwidth that the positioning scheduler(s) 122 for each involved radio base station 12 may use for final scheduling of radio resources for positioning measurements. Optionally, a priority value may also be assigned. This information is then sent over Iub to each (tentatively) involved radio base station 12 as part of a scheduling command 113.

The Positioning Scheduler 122 of a radio base station 12 (which is a part of an overall Scheduler 123 of the radio base station) that receives such information enters it into the Scheduler 123 of the radio base station 12, where the demand for resources is balanced against other traffic and available hardware resources. When the scheduling is available, a grant (i.e. a scheduling command 124) is sent to the user equipment 13 that is to be positioned. It may also be necessary to issue a positioning measurement command that triggers radio transmission from the user equipment 13. This command may be issued directly over the Uu-interface or over RRC from the radio network controller 11. This latter alternative would also require backward signalling to the radio network controller over Iub. During the scheduled time slot and at the correct frequency band, the radio base stations 12 receive the radio signal from the user equipment 13 that is intended for the time-of-arrival measurement in a unit 126 of the radio base station 12. The time-of-arrival is then estimated and forwarded over Iub to the unit responsible for UE Positioning 112. Using measurement results from all radio base stations 12,121, the unit 112 responsible for UE Positioning determines the position estimate and reports it back to the core network with a LOCATION REPORT 117 over the Iu-interface.

Regarding the downlink method in conjunction with figure 2, the procedure begins by the reception of a LOCATION REPORTING CONTROL message 216 in the radio network controller. The unit 212 responsible for positioning determines that a downlink terrestrial positioning method is to be used. The unit 112 for UE positioning may determine, e.g., the geographical Cell-ID position of the user equipment 23 or even compute a list of radio base stations 22,221 that are within range from the user equipment 23 that is to be positioned. The unit 112 responsible for UE positioning forwards the information to the Positioning Scheduler Manager 211 in form of a command to schedule positioning measurements. As depicted in figure 2, the Positioning Scheduler Manager 211 may be a part of the UE Positioning function 211. The forwarded information includes preferably the interval in time during which the positioning measurements must be completed. The Positioning Scheduler Manager 211 may first need to retrieve information from all the radio base stations 22,221 that are involved in the new positioning. This information is signalled across the Iub-, or possibly the Iur-, interface. The signalled information 214 includes at least the tones and priorities for resources that are already allocated to other user equipments that perform positioning measurements. The Positioning Scheduler Manager 211 then determines the allowed time slot(s) and the allowed tone(s) that the positioning scheduler(s) 222 of each involved radio base station 22 may use for final scheduling of radio resources for positioning measurements. Optionally, a priority may also be assigned. This information is then sent over the Iub-interface to each (tentatively) involved radio base station 22 as part of a scheduling command 213.

The Positioning Scheduler 222 of a radio base station (which is a part of an overall Scheduler 223 of the radio base station) that receives such information enters it into the Scheduler 223 of the radio base station 22, where the demand for resources is balanced against other traffic and available hardware resources. When the scheduling is available the radio base station 22 will initiate transmissions accordingly. At this point in time the user equipment 23 has been informed to initiate positioning measurements at the correct tone(s). This command may either be signalled directly over the Uu-interface or over RRC. This latter alternative would also require backward signalling to the radio network controller 21 over the Iub-interface. During the scheduled time slot and for the scheduled tones, the user equipment receives the radio signal from each radio base station 22 that is intended for the time of arrival measurement. The time of arrival is then estimated and reported over RRC to the unit 212 responsible for UE Positioning. Using measurement results for all radio base stations 22,221, the unit 212 responsible for UE Positioning determines the position estimate and reports it back to the core network with a LOCATION REPORT 217 over the Iu-interface.

The above description implicitly assumes that the radio access network (RAN) is synchronized. The invention is however applicable also to unsynchronized RANs provided that the time relation between the RBSs and the UE are determined by other means. Given such relative timing information, the Positioning Scheduler Manager function can still operate as described above. Another alternative would be to introduce guard bands in time and frequency. The uplink and downlink radio access schemes used for the description of the present invention can of course be switched. Similar techniques can be applied also to other access methods. In such cases the signaled information would also be subject to change. The distribution of functionality in the RAN can be different than in the present IE.

## Claims

1. A method in a scheduling manager (111,211) of a network controller unit (11,21) in a mobile telecommunication system for scheduling of positioning information of a user equipment (13,23) in said telecommunication system,
**characterised by**
receiving a command for terrestrial positioning measurements of the user equipment (13,23);
retrieving a list of candidate radio base stations (12,121,22,221) for scheduling of radio resources and information from said candidate radio base stations on presently available radio resources;
calculating scheduling commands to the respective scheduler (123,223) of selected radio base stations of said candidate base stations, whereby, when the scheduling is performed on the uplink, the scheduling commands include information on at least one of measurement time slot, frequency band, and bandwidth, and whereby, when the scheduling is performed on the downlink, the scheduling commands include information on at least one of measurement time slots and allowed tones;
signalling the scheduling commands to the selected radio base stations (12,22).

2. The method according to claim 1, comprising the step of retrieving scheduling support information for the user equipment (13,23).

3. The method according to claim 2, whereby the scheduling support information consists of the cell ID of the cell where the user equipment (13,23) is located.

4. The method according to claim 1, whereby a priority value is assigned to the radio resources to be scheduled.

5. A method in a radio base station unit (12,22) connected to a centralised network controller unit (11,21) of a mobile telecommunication system for scheduling of positioning information of user equipments (13,23) in said telecommunication system,
**characterised by**
transmitting on request of the centralised network controller unit (11,21) information on presently available radio resources that are allocated to said radio base station (12,22);
allocating radio resources in response to scheduling commands for scheduling of positioning information received from the centralised network controller unit (11,21), whereby, when allocating uplink radio resources, the scheduling commands include at least one or more information on measurement time slot, frequency band, and bandwidth, and whereby, when allocating downlink radio resources, the scheduling commands include at least one or more information on measurement time slots and allowed tones.

6. A scheduling manager (111,211,31) integrated in a network controller unit (11,21,30) of a mobile telecommunication system for scheduling of positioning information of a user equipment (13,23) in said telecommunication system,
**characterised in**
a receiver (311) for receiving of commands for terrestrial positioning measurements of the user equipment and for receiving of lists of candidate radio base stations for scheduling of radio resources and information from said candidate radio base stations on presently available radio resources;
a storing unit (312) for storing a list of candidate radio base stations and their presently available radio resources;
a means (313) for calculating scheduling commands to the respective scheduler of selected radio base stations of said candidate base stations, whereby, when scheduling is performed on the uplink, the scheduling commands include information on at least one of measurement time slot, frequency band, and bandwidth, and whereby, when the scheduling is performed on the downlink, the scheduling commands include information on at least one of measurement time slots and allowed tones;
a means (314) for signalling the scheduling commands to the selected radio base stations.

7. The scheduling manager according to claim 6, whereby the network controller unit (30) is a Radio Network Controller in a WCDMA-based communication system.

8. A positioning scheduler (122,222,33) integrated in a radio base station unit (12,22,32) connected to a centralised network controller unit (11,21,30) in a mobile telecommunication system for scheduling of positioning information of user equipments (13,23) in said telecommunication system,
**characterised in**
means (332) for storing information on presently available radio resources that are allocated to said radio base station (32);
means (331) for transmitting said information on request of the centralised network controller unit (30);
means (333) for allocating radio resources in response to scheduling commands for scheduling of positioning information received from the centralised network controller unit (30), whereby, when allocating uplink radio resources, the scheduling commands include at least one or more information on measurement time slot, frequency band, and bandwidth, and whereby, when allocating downlink radio resources, the scheduling commands include at least one or more information on measurement time slots and allowed tones.

## Patentansprüche

1. Verfahren in einer Zeitplanungs-Verwaltungseinrichtung (111, 211) einer Netzwerksteuerungseinheit (11, 21) in einem Mobil-Telekommunikationssystem zur Zeitplanung von Standortinformation einer Benutzereinrichtung (13, 23) in dem Telekommunikationssystem,
**gekennzeichnet durch**:
Empfangen eines Befehls für terrestrische Standortmessungen der Benutzereinrichtung (13, 23);
Abrufen einer Liste von Kandidaten-Funkbasisstationen (12, 121, 22, 221) zur Zeitplanung von Funkressourcen und Information von den Kandidaten-Funkbasisstationen über gegenwärtig verfügbare Funkressourcen;
Berechnen von Zeitplanungsbefehlen an die jeweilige Zeitplanungseinrichtung (123, 223) ausgewählter Funkbasisstationen der Kandidaten-Basisstationen, worin, wenn die Zeitplanung auf der Aufwärtsstrecke durchgeführt wird, die Zeitplanungsbefehle Information über mindestens eines von Folgendem einschließen, nämlich Messungszeitschlitz, Frequenzband und Bandbreite, und worin, wenn die Zeitplanung auf der Abwärtsstrecke durchgeführt wird, die Zeitplanungsbefehle Information über mindestens eines von Folgendem einschließen, nämlich Messungszeitschlitze und erlaubte Töne;
Signalisieren der Zeitplanungsbefehle an die ausgewählten Funkbasisstationen (12,22).

2. Verfahren nach Anspruch 1, umfassend den Schritt: Abrufen von Zeitplanungsunterstützungsinformation für die Benutzereinrichtung (13, 23).

3. Verfahren nach Anspruch 2, worin die Zeitplanungsunterstützungsinformation aus der Zellenkennung der Zelle, wo sich die Benutzereinrichtung (13, 23) befindet, besteht.

4. Verfahren nach Anspruch 1, worin den zu planenden Funkressourcen ein Prioritätswert zugewiesen wird.

5. Verfahren in einer Funkbasisstation (12, 22), die mit einer zentralisierten Netzwerksteuerungseinheit (11, 21) eines Mobil-Telekommunikationssystems verbunden ist, zur Zeitplanung von Standortinformation von Benutzereinrichtungen (13, 23) in dem Telekommunikationssystem,
**gekennzeichnet durch**:
auf Anforderung der zentralisierten Netzwerksteuerungseinheit (11, 21) erfolgendes Übertragen von gegenwärtig verfügbaren Funkressourcen, die der Funkbasisstation (12, 22) zugeteilt sind;
Zuteilen von Funkressourcen als Antwort auf Zeitplanungsbefehle zur Zeitplanung von Standortinformation, die von der zentralisierten Netzwerksteuerungseinheit (11, 21) empfangen werden, worin, wenn Aufwärtsstrecken-Funkressourcen zugeteilt werden, die Zeitplanungsbefehle mindestens eine oder mehr Information über Messungszeitschlitz, Frequenzband und Bandbreite einschließen und worin, wenn Abwärtsstrecken-Funkressourcen zugeteilt werden, die Zeitplanungsbefehle mindestens eine oder mehr Information über Messungszeitschlitze und erlaubte Töne einschließen.

6. Zeitplanungs-Verwaltungseinrichtung (111, 211, 31), die in eine Netzwerksteuerungseinheit (11, 21, 30) eines Mobil-Telekommunikationssystems integriert ist, zur Zeitplanung von Standortinformation einer Benutzereinrichtung (13, 23) in dem Telekommunikationssystem,
**gekennzeichnet durch**:
einen Empfänger (311) zum Empfangen von Befehlen für terrestrische Standortmessungen der Benutzereinrichtung und zum Empfangen von Listen von Kandidaten-Funkbasisstationen zur Zeitplanung von Funkressourcen und Information von den Kandidaten-Funkbasisstationen über gegenwärtig verfügbare Funkressourcen;
eine Speichereinheit (312) zum Speichern einer Liste von Kandidaten-Funkbasisstationen und ihrer gegenwärtig verfügbaren Funkressourcen;
ein Mittel (313) zum Berechnen von Zeitplanungsbefehlen an die jeweilige Zeitplanungseinrichtung ausgewählter Funkbasisstationen der Kandidaten-Basisstationen, worin, wenn die Zeitplanung auf der Aufwärtsstrecke durchgeführt wird, die Zeitplanungsbefehle Information über mindestens eines von Folgendem einschließen, nämlich Messungszeitschlitz, Frequenzband und Bandbreite, und worin, wenn die Zeitplanung auf der Abwärtsstrecke durchgeführt wird, die Zeitplanungsbefehle Information über mindestens eines von Folgendem einschließen, nämlich Messungszeitschlitze und erlaubte Töne;
ein Mittel (314) zum Signalisieren der Zeitplanungsbefehle an die ausgewählten Funkbasisstationen.

7. Zeitplanungs-Verwaltungseinrichtung nach Anspruch 6, worin die Netzwerksteuerungseinheit (30) ein Funknetzcontroller in einem WCDMA-gestützten Kommunikationssystem ist.

8. Standortzeitplanungseinrichtung (122, 222, 33), die in eine Funkbasisstation (12, 22, 32) integriert ist, die mit einer zentralisierten Netzwerksteuerungseinheit (11, 21, 30) in einem Mobil-Telekommunikationssystem verbunden ist, zur Zeitplanung von Standortinformation von Benutzereinrichtungen (13, 23) in dem Telekommunikationssystem,
**gekennzeichnet durch**:
Mittel (332) zum Speichern von Information über gegenwärtig verfügbare Funkressourcen, die der Funkbasisstation (32) zugeteilt sind;
Mittel (331) zum Übertragen der Information auf Anforderung der zentralisierten Netzwerksteuerungseinheit (30);
Mittel (333) zum Zuteilen von Funkressourcen als Antwort auf Zeitplanungsbefehle zur Zeitplanung von Standortinformation, die von der zentralisierten Netzwerksteuerungseinheit (30) empfangen werden, worin, wenn Aufwärtsstrecken-Funkressourcen zugeteilt werden, die Zeitplanungsbefehle mindestens eine oder mehr Information über Messungszeitschlitz, Frequenzband und Bandbreite einschließen und worin, wenn Abwärtsstrecken-Funkressourcen zugeteilt werden, die Zeitplanungsbefehle mindestens eine oder mehr Information über Messungszeitschlitze und erlaubte Töne einschließen.

## Revendications

1. Procédé dans un gestionnaire de programmation (111, 211) d'une unité formant contrôleur de réseau (11, 21) dans un système de télécommunications mobiles pour la programmation d'informations de positionnement d'un équipement d'utilisateur (13, 23) dans ledit système de télécommunications,
**caractérisé en ce qu'**il comprend :
la réception d'une commande pour des mesures de positionnement terrestre de l'équipement d'utilisateur (13, 23) ;
la récupération d'une liste de stations de base radio candidates (12, 121, 22, 221) pour la programmation des ressources radio et d'informations provenant desdites stations de base radio candidates sur les ressources radio actuellement disponibles ;
le calcul de commandes de programmation pour le programmateur respectif (123, 223) des stations de base radio sélectionnées parmi lesdites stations de base candidates, où, lorsque la programmation est effectuée sur la liaison montante, les commandes de programmation comprennent des informations sur au moins un élément parmi la tranche horaire de mesure, la bande de fréquence et la largeur de bande, et où, lorsque la programmation est effectuée sur la liaison descendante, les commandes de programmation comprennent des informations sur au moins un élément parmi les tranches horaires de mesure et les tonalités autorisées ;
le signalement des commandes de programmation aux stations de base radio sélectionnées (12, 22).

2. Procédé selon la revendication 1, comprenant l'étape de récupération d'informations d'aide à la programmation pour l'équipement d'utilisateur (13, 23).

3. Procédé selon la revendication 2, dans lequel les informations d'aide à la programmation consistent en l'identifiant de cellule de la cellule où se trouve l'équipement d'utilisateur (13, 23).

4. Procédé selon la revendication 1, dans lequel une valeur de priorité est attribuée aux ressources radio devant être programmées.

5. Procédé dans une unité formant station de base radio (12, 22) reliée à une unité formant contrôleur de réseau centralisé (11, 21) d'un système de télécommunications mobiles pour la programmation d'informations de positionnement d'équipements d'utilisateurs (13, 23) dans ledit système de télécommunications,
**caractérisé en ce qu'**il comprend :
la transmission, à la demande de l'unité formant contrôleur de réseau centralisé (11, 21), d'informations sur les ressources radio actuellement disponibles qui sont affectées à ladite station de base radio (12, 22) ;
l'affectation de ressources radio en réponse aux commandes de programmation pour la programmation des informations de positionnement reçues de l'unité formant contrôleur de réseau centralisé (11, 21), où, lors de l'affectation de ressources radio en liaison montante, les commandes de programmation comprennent au moins une ou plusieurs informations sur la tranche horaire de mesure, la bande de fréquence et la largeur de bande, et où, lors de l'affectation de ressources radio en liaison descendante, les commandes de programmation comprennent au moins une information ou davantage sur les tranches horaires de mesure et les tonalités autorisées.

6. Gestionnaire de programmation (111, 211, 31) intégré dans une unité formant contrôleur de réseau (11, 21, 30) dans un système de télécommunications mobiles pour la programmation d'informations de positionnement d'un équipement d'utilisateur (13, 23) dans ledit système de télécommunications,
**caractérisé par** en ce qu'il comprend :
un récepteur (311) pour recevoir des commandes pour des mesures de positionnement terrestre de l'équipement d'utilisateur et pour recevoir une liste des stations de base radio candidates pour la programmation des ressources radio et des informations provenant desdites stations de base radio candidates sur les ressources radio actuellement disponibles ;
une unité de stockage (312) pour stocker une liste des stations de base radio candidates et leurs ressources radio actuellement disponibles ;
un moyen (313) pour calculer des commandes de programmation pour le programmateur respectif des stations de base radio sélectionnées parmi lesdites stations de base candidates, où, lorsque la programmation est effectuée sur la liaison montante, les commandes de programmation comprennent des informations sur au moins un élément parmi la tranche horaire de mesure, la bande de fréquence et la largeur de bande, et où, lorsque la programmation est effectuée sur la liaison descendante, les commandes de programmation comprennent des informations sur au moins un élément parmi les tranches horaires de mesure et les tonalités autorisées ;
un moyen (314) pour signaler les commandes de programmation aux stations de base radio sélectionnées.

7. Gestionnaire de programmation selon la revendication 6, dans lequel l'unité formant contrôleur de réseau (30) est un contrôleur de réseau radio dans un système de communication à base d'accès multiple à large bande par partage de code (WCDMA).

8. Programmateur de positionnement (122, 222, 33) intégré dans une unité formant station de base radio (12, 22, 32) reliée à une unité formant contrôleur de réseau centralisé (11, 21, 30) d'un système de télécommunications mobiles pour la programmation d'informations de positionnement d'équipements d'utilisateurs (13, 23) dans ledit système de télécommunications,
**caractérisé en ce qu'**il comprend :
un moyen (332) pour stocker des informations sur les ressources radio actuellement disponibles qui sont affectées à ladite station de base radio (32) ;
un moyen (331) pour transmettre lesdites informations à la demande de l'unité formant contrôleur de réseau centralisé (30) ;
un moyen (333) pour affecter des ressources radio en réponse aux commandes de programmation pour la programmation des informations de positionnement reçues de l'unité formant contrôleur de réseau centralisé (30), où, lors de l'affectation de ressources radio en liaison montante, les commandes de programmation comprennent au moins une ou plusieurs informations sur la tranche horaire de mesure, la bande de fréquence et la largeur de bande, et où, lors de l'affectation de ressources radio en liaison descendante, les commandes de programmation comprennent au moins une information ou davantage sur les tranches horaires de mesure et les tonalités autorisées.
